# EUROPEAN PATENT SPECIFICATION

(11) **EP 0 537 479 B1**
(45) Date of publication and mention of the grant of the patent: **05.07.1995**
(21) Application number: 92115595.8
(22) Date of filing: 11.09.1992
(51) Int. Cl.: C01G 19/00, C08K 3/24

(54) **Zinc stannate powder for molding materials and process for preparation thereof**
Zink-Stannat-Pulver für Formmassen und Verfahren zu dessen Herstellung
Poudre de stannate de zinc pour matériau de moulage et procédé pour sa préparation

(30) Priority: 18.09.1991 JP 265521/91
(43) Date of publication of application: 21.04.1993
(73) Proprietor: MITSUBISHI MATERIALS CORPORATION, Chiyoda-ku, Tokyo (JP)
(72) Inventor: Kawamura, Kyoko, Mitsubishi Mater.Kabushiki Kaisha, Omiya-shi, Saitama-ken (JP); Nishihara Akira, Mitsubishi Mat.Kabushiki Kaisha,, Omiya-shi, Saitama-ken (JP)
(74) Representative: von Füner, Alexander, Dr.

(56) References cited:
- WO-A-90/09962
- FR-A- 1 501 763
- CHEMICAL ABSTRACTS, vol. 95, no. 18, 2 November 1981, Columbus, Ohio, US; abstract no. 161137b, page 711
- ZEITSCHRIFT FÜR ANORGANISCHE UND ALLGEMEINE CHEMIE, vol. 527, 1985, LEIPZIG, pages 193-202, INAGAKI

## Description

### Field of the Invention

The present invention relates to a high purity zinc stannate powder of which particles having diameters of 2-5 »m account for not less than 80 % by weight. Molded bodies in which this powder was dispersed exhibit excellent packing property and combustion resistance.

### background of the Invention

Silica has been used as a filler for LSI molding materials. However, silica contains radioactive impurities which radiate α-rays and, therefore, is liable to cause malfunction of LSI's. Thus employment of titanium oxide, which has low a radiation and a high dielectric constant, has been attempted. More recently, antimony trioxide, which has strong combustion-resisting effect, came into use as a filler for molding materials. However, antimony trioxide has strong toxicity and it is now the trend to restrict use thereof. Thus a suitable non-toxic substitute therefor is desired.

Zinc stannate powders have excellent combustion resistance effect and are chemically stable and, therefore, are seen as a substitute for antimony trioxide.

Generally, it is necessary for fillers for molding materials to be highly pure and uniform in particle size and it is considered that particles not smaller than several »m are preferred. Zinc hydroxystannate obtained by the conventional wet process is fine gel or sol and the resulting zinc stannate powder is of particles not larger than 0.1 »m in particle diameter, which is too fine to be incorporated in a resin. That is, incorporation thereof in a resin in a large amount makes the resulting resin block brittle impairing the bendability thereof. In the conventional process, the starting materials contain sodium and thus the resulting powder may also contain sodium as an impurity.

In the conventional process, sodium hydroxystannate is first produced and then the sodium is replaced with zinc. This conventional process is complicated in the process steps. Sodium hydroxystannate, which is very expensive, is used as a starting material and, therefore, this process is not suitable for the commercial production of zinc stannate.

As stated above, the conventional zinc stannate powder is too fine as a filler for molding materials and the process for preparation thereof is complicated and not economical.

The object of the present invention is to provide a filler for molding materials which overcomes the above problems and a process for preparation thereof.

### Disclosure of the Invention

This invention provides (a) a zinc stannate powder for molding filler material of which particles having diameters of 2-5 »m account for not less than 80 % and (b) a process for preparing a zinc stannate powder as described above comprising mixing an acidic solution containing stannic ions and zinc ions and an aqueous ammonia solution, forming a precipitate of zinc hydroxystannate at a final pH in the range of 5-9, collecting the precipitate by filtration, drying it and firing it.

In the process of the present invention, an acidic aqueous solution of stannic and zinc ions and an aqueous ammonia solution are used as starting materials. As stannic ion sources, stannic chloride, metallic tin, etc. are used. Stannous ions do not give good precipitate. As zinc sources, there can be used zinc oxide, zinc sulfate, metallic zinc, etc. Stannic oxide, zinc stannate, etc. are dissolved in hydrochloric acid, concentrated hydrochloric acid or sulfuric acid to give acidic aqueous solutions of tin and zinc.

As an alkaline solution, use of alkali metal salts is not desirable because alkali metal residues yet included in resulting zinc stannate powder.

When an acidic aqueous solution containing stannic ions and zinc ions and an aqueous ammonia solution are mixed, tin and zinc react at the equivalent molar ratio and crystalline precipitate of zinc hydroxystannate is formed at a final pH in the range of 5-9. It is preferable to stir the aqueous solution for more than one hour to accelerate formation of the precipitate. At pH's of not higher than 4 or not lower than 10, too fine precipitate of zinc stannate is included and, therefore, zinc stannate powder having a particle size in the intended range cannot be obtained.

The thus obtained zinc hydroxystannate precipitate is collected by filtration, washed, dried and fired at around 400 °C so as to give a zinc stannate powder of which particles having diameters of 2-5 »m account for 80 %. When the precipitate is collected by filtration, impurity salts are removed by decantation and thus high purity zinc stannate powder is obtained.

When OH radicals are removed by firing, amorphous zinc stannate is obtained by firing at a temperature of up to 400 °C and crystalline zinc stannate is obtained by firing at a temperature of over 400 °C.

The zinc stannate powder of the present invention has uniform particle size and can form excellent combustion-resisting molding material provided with excellent packing property when it is used in combination with conventionally used silica powder.

The zinc stannate powder of the present invention is well removed of salts by decantation and, therefore, suitable for combustion-resisting filler for molding resin material for electronic devices.

The invention will now be illustrated by way of working examples and comparative examples with reference to the attached drawings.

### Brief Description of the Drawings

Fig. 1 is an X-ray diffraction chart of zinc stannate powder obtained in Example 1.

Fig. 2 is a graph showing the particle size distribution of the zinc stannate powder obtained in Example 1.

### Example 1

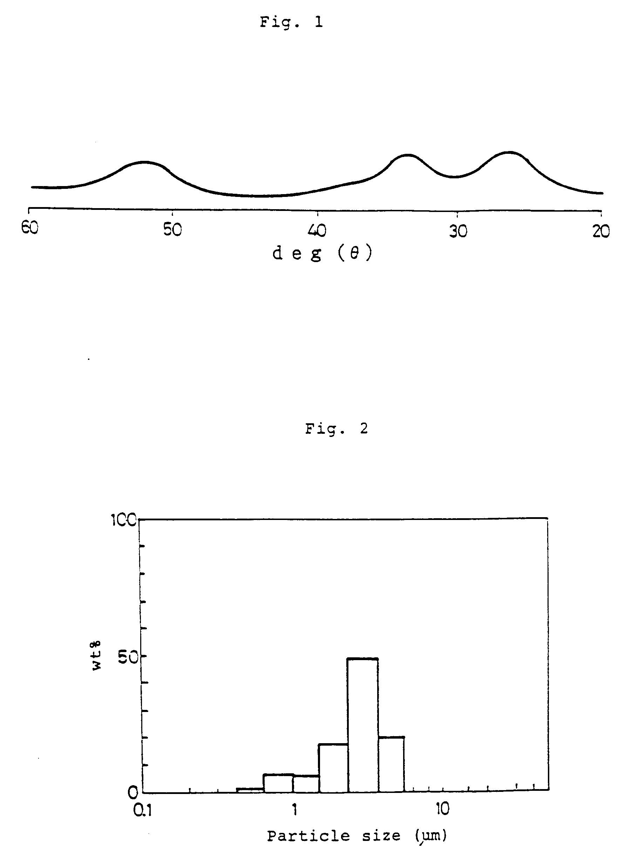

A tin/zinc aqueous solution was prepared by mixing 21.7 g of a 60 % hydrochloric acid solution of tin stannate (corresponding to 0.05 mol), 4.0 g of zinc oxide (corresponding to 0.05 mol) and 10 mol of concentrated hydrochloric acid. This solution was dropwise added to 150 g of a 3 mol/liter ammonia solution under agitation so as to form zinc hydroxystannate. The final pH of the solution was 8. After the reaction was completed, the agitation was further continued for one hour. Thereafter, the precipitate was collected by decantation and filtration, whereby salt impurities were removed. The collected precipitate was dried and fired at 400 °C for 2 hours. Thus 10.6 g of white powder was obtained (yield: 91.4 %). The obtained powder was analyzed by the X-ray diffraction method. The results are shown as Fig. 1, which shows formation of amorphous zinc stannate free from zinc hydroxystannate and other tin and zinc compounds. The particle size distribution of this product was as shown in Fig. 2, which indicates that particles having particle diameters of 2-5 »m account for not less than 80 %.

### Example 2

A tin/zinc solution was prepared by mixing 108.75 g of a 60 % hydrochloric acid solution of stannic chloride (corresponding to 0.25 mol of tin), 4.0 g of zinc oxide (corresponding to 0.25 mol of zinc) and a 10 mol of concentrated hydrochloric acid. This solution was dropwise added to 700 g of a 3 mol/liter ammonia solution under agitation so as to form zinc hydroxystannate. The final pH of the solution was 5. After the reaction was completed, the agitation was further continued for one hour. Thereafter, the precipitate was collected by decantation and filtration, whereby salt impurities were removed. The collected precipitate was dried and fired at 400 °C for 2 hours. Thus 55.1 g of white powder was obtained (yield: 95.0 %).

### Example 3

The zinc stannate powder obtained in Examples 1 and 2 were mixed with a poly(vinyl chloride) resin and kneaded so that it was well dispersed therein and the resin was made into sheets. Limiting oxygen indices (LOI) were measured. The results are shown in Table 1. It is apparent from Table 1 that zinc stannate powder of the present invention provides resins with combustion resistance. Further, the zinc stannate powder of the present invention exhibits excellent packing property when it is used in combination with silica powder and, therefore, the resulting IC mold package has sufficient strength and thus high reliability.

**Table 1**

| | Example 1 | | Example 2 | | Com. Ex. |
|---|---|---|---|---|---|
| Zinc stannate (wt%) | 2 | 5 | 2 | 5 | 0 |
| LOI | 24.5 | 25.0 | 24.0 | 25.0 | 22.5 |

High purity zinc stannate powder can be produced easily and economically in accordance with the present invention. The obtained zinc stannate powder has uniform particle size and excellent combustion resistance and, therefore, is suitable for combustion resisting filler for molding resins for electronic devices.

## Claims

1. A zinc stannate powder for molding filler material of which particles having diameters of 2-5 »m account for not less than 80 %.

2. A process for preparing a zinc stannate powder as claimed in claim 1 comprising mixing an acidic solution containing stannic ions and zinc ions and an aqueous ammonia solution, forming a precipitate of zinc hydroxystannate at a final pH in the range of 5-9, collecting the precipitate by filtration, drying it and firing it.

## Patentansprüche

1. Zinkstannatpulver als Formstoff, dessen Teilchen mit einem Durchmesser von 2 bis 5 »m wenigstens 80% ausmachen.

2. Verfahren zur Herstellung eines Zinkstannatpulvers nach Anspruch 1, das das Mischen einer sauren Zinn(IV)- und Zink-Ionen enthaltenden Lösung mit einer wässerigen Ammoniaklösung, die Bildung eines Niederschlags von Zinkhydroxystannat bei einem End-pH im Bereich von 5 bis 9, das Sammeln des Niederschlags durch Filtration sowie dessen Trocknen und Brennen umfaßt.

## Revendications

1. Poudre de stannate de zinc pour matériau de charge de moulage dont les particules ayant des diamètres de 2 à 5 »m comptent pour au moins 80 %.

2. Procédé de préparation d'une poudre de stannate de zinc selon la Revendication 1 comprenant le mélange d'une solution acide contenant des ions stanniques et des ions de zinc avec une solution ammoniacale aqueuse, la formation d'un précipité d'hydroxystannate de zinc avec un pH final de 5 à 9, la récupération du précipité par filtration, son séchage et sa cuisson.
